# EUROPEAN PATENT SPECIFICATION

(11) **EP 2 319 385 B1**
(45) Date of publication and mention of the grant of the patent: **25.06.2014**
(21) Application number: 09014059.1
(22) Date of filing: 10.11.2009
(51) Int. Cl.: A47L 15/50

(54) **Container holder for a dish basket of a dishwasher**
Halter für einen Behälter geeignet für einen Geschirrkorb eines Geschirrspülers
Support de récipient pour panier de lave-vaisselle

(43) Date of publication of application: 11.05.2011
(73) Proprietor: Electrolux Home Products Corporation N.V., 1130 Brussel (BE)
(72) Inventor: Paschini, Claudio, 33080 Roveredo in Piano (PN) (IT)
(74) Representative: Röder, Richard

(56) References cited:
- EP-A1- 0 284 459
- EP-A1- 2 067 431
- DE-A1- 3 510 183
- DE-A1- 19 944 883
- DE-A1-102006 007 330
- DE-U1- 9 408 459
- GB-A- 2 440 904
- JP-A- 2005 185 664
- US-A- 3 451 556
- US-A- 5 794 792
- ANONYMOUS: 'Ceiling Sign-Hangers', [Online] 12 April 2009, XP055032140 Retrieved from the Internet: <URL:http://signholdersupply.com/searchresu lt.aspx?CategoryID=5> [retrieved on 2012-07-09]
- ANONYMOUS: 'T-Bar 'Clips'', [Online] 14 February 2009, INTERNET ARTICLE, XP055032147 Retrieved from the Internet: <URL:http://web.archive.org/web/20090214011 549/http://hangups.com/TBarClips.html> [retrieved on 2012-07-09]

## Description

The invention concerns a container holder, especially a bottle holder, for a dish basket of a dishwasher, comprising at least one detachable attachment means for attaching the container holder to at least one basket bar of the dish basket and a main body for holding a container with an opening, in particular a container with a narrowed opening, by inserting at least a part of the main body into the opening, the main body being connected to the attachment means.

Such bottle holders are already known in the prior art and serve to be able to properly hold or wash containers with an opining, especially prolonged containers with a narrow opening, like jars, bottles, vases and the like. The container is usually turned upside down and mounted on the holder by inserting a respective portion of the main body through the opening into the bottle.

A bottle holder as described above is known from EP 2 067 431 A1. The bottle holder is made from a single piece of wire, wherein this wire is comparable to the wire dish baskets are normally made of. The bottle holder can be detachably attached to the dish basket.

As the known bottle holder is made from steel wire, it is of a rigid shape. Consequently, on the one hand, the holder itself can be damaged during transportation; on the other hand, containers mounted on the holder can be damaged. Additionally, it is expensive to produce.

It is the object of the present invention to provide a container holder, especially a bottle holder, that is easy to mount and to remove, cheap to produce and of a simple construction as well as a better design.

To solve this problem, the bottle holder of the initially mentioned type according to the invention is characterised in that the main body is of generally elongated shape and flexibly adapted to form a protruding loop for inserting into the opening of a container. The elongated main body is adapted to be bent into a loop. The protruding loop is adapted to flexibly enter into the opening (15) of said container. The main body of the container holder can take up an outstretched condition when at least one attachment means is not attached to a basket bar and flexibly adapted to form said protruding loop, when all attachment means are fixed to basket bars.

That is, the invention proposes not to use a rigid main body, but use a flexible main body which, in its outstretched condition, when it is not assembled on into the dish basket, shows its generally elongated shape. In order to assemble the bottle holder on the dish basket for use, the two attachment means provided at opposite ends of the elongated main body are attached to the dish basket such that the flexible main body is bent into a loop protruding from the bottom of the dish basket. The thus-formed loop can then be inserted into the opening of the container, which can be with advantage facilitated by the flexibility of the main body that can adapt to different openings and containers, in particular to different neck sizes of bottles and the like. The flexible loop can subsequently adapt to the inner container size and thus stabilise the container in the dish basket.

The flexibility of the main body can be readily chosen by the skilled person such that it is easy to bend the loop during the assembly of the bottle holder on the dish basket, but preferably also such that its flexible loop is rigid enough to stably hold the container mounted thereon. In this respect the cross-section of the main body can readily be chosen to increase stability, especially wherein it is at least in part bar-shaped. In particular, depending on the chosen geometry of the generally elongated shape of the container holder that determines the way in which the loop is going to be formed, suitable cross-section(s) of the main body can be chosen in order to facilitate forming the loop and/or stabilising it.

Preferably, at least the main body consists of a plastics material that is flexibly adapted to be bent into a flexible protruding loop. Preferably the plastics material is suitably chosen for easy and cheap moulding of the main body. There also is - as opposed to the wire holders known in the prior art - no need to provide a protective coating. Thus, the inventive container holder allows substantial economic savings on the part.

Another advantage of the container holder is its simple, but optically attractive design. The container holder can be easily attached to the dish basket and easily removed. It is convenient to store, due to its flat form when disassembled from the dish basket. Additionally, it does not comprise edges or bulky parts.

According to a first embodiment of the invention, the elongated main body is substantially Y-shaped in its outstretched condition and comprises three arms, wherein a single arm is connected to a first attachment means and its remaining two opposite arms are connected to a second attachment means, wherein in order to bend the loop the single arm passes between the two opposite arms. In other words, the base arm of the Y-shape is connected to said first attachment means, while the other two arms are both connected to said second attachment means. In order to form the loop, the first attachment means fixed to the single arm as well as the single arm are put through the gap between the two opposite arms of the Y-shape and both said first and said second attachment means are attached, for example to two neighbouring bars of the dish basket, so that a stable and robust loop is formed. Preferably, the part of the main body comprising the single arm and the part of the main body comprising two opposite arms are substantially equal in length.

According to a second embodiment of the invention, the main body of the container holder is substantially bar-shaped in the outstretched condition and both ends of the bar-shaped main body are fixed to separate attachment means. Additionally, a loop forming means is provided, which essentially brings two parts of the bar-shaped main body close to each other to form the loop. In an exemplary embodiment, the attachment means are attached to neighbouring basket bars and the loop forming means is positioned at a certain point along the main body. Then, a loop of the main body is bent wherein another part of the main body passes said certain point along the main body. The latter part of the main body is inserted into the support to stabilise the loop. In a preferred realisation, the loop forming means may comprise a first ring enclosing the main body and a second open or openable ring as support. A suitable figure eight-shaped loop forming means is easy and cheap to produce and easy to handle.

The attachment means may comprise, for example, clamping means and/or engaging means. A snap-fit means may for example be realised in a known manner, such that the attachment means comprise a support for a basket bar so that the holder can be fixed thereto.

Preferably, the at least one of the attachment means is bar-shaped and comprises a longitudinal groove for a basket bar. If the bar-shaped attachment means are made from an elastic plastics material, the groove may have a form-fitting part in the centre of the bar-shaped attachment means and a narrower opening through which the bar can be pressed into the central part, working as a snap-fit means. To detach the holder from the bar, due to the flexibility of the material, pulling the holder, in particular the attachment means, is sufficient, since the narrower opening widens, releasing the bar.

Further advantages and details of the current invention can be learned from the following unlimiting description of examples of the first and the second embodiment of the invention with reference to a schematic drawing, wherein:
- Fig. 1: shows an example of the first embodiment of the container holder of the invention in a not installed, outstretched condition,
- Fig. 2: shows the bottle holder of figure 1 assembled on a dish basket,
- Fig. 3: shows a container mounted on the container holder of figure 2, and
- Fig. 4: shows an example of the second embodiment of the container holder of the invention.

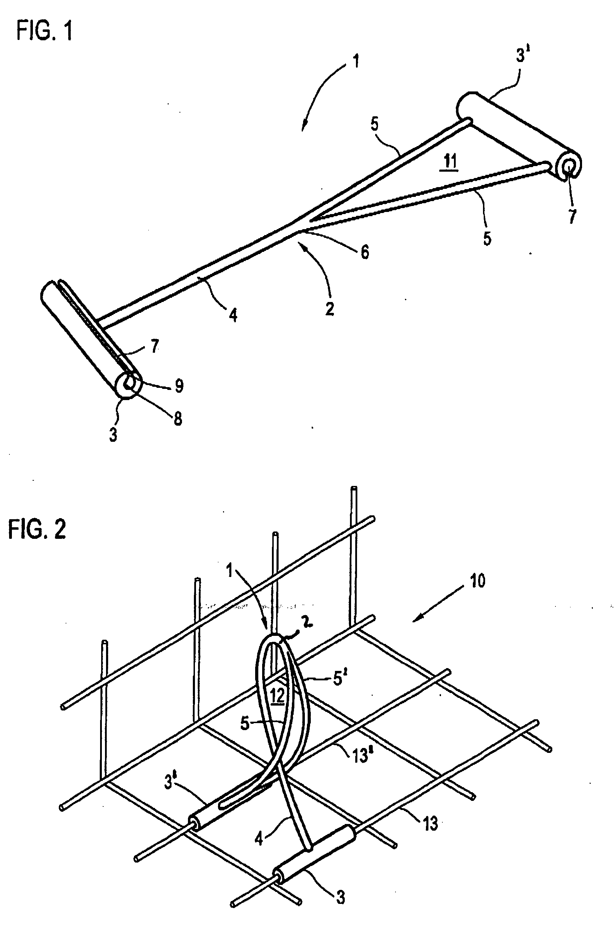

Fig. 1 shows a bottle holder 1 according to the first embodiment of the invention in its outstretched condition, not assembled on a dish basket. It comprises an elongated main body 2 that is connected at its both opposing ends to bar-shaped attachment means 3 and 3', respectively. The main body 2 is flexible and made of a plastics material. The main body 2 has generally a Y shape, comprising one single arm 4 (base arm of Y shape) splitting up into two arms 5 and 5' that are arranged opposite to each other and extend from the single arm from a junction 6, which is positioned substantially halfway along the main body 2, dividing it into two parts of at least approximately equal length. The single arm 4 is connected to the first attachment means 3, whereas the two opposite arms 5 and 5' are both connected to the second attachment means 3'.

The bar-shaped attachment means 3 and 3' each comprise a recess or groove 7 and are also made of a plastics material, preferably the same material as the main body 2. In fact, it is also possible to mould the bottle holder 1 as a single piece.

Each groove 2, adapted to receive a basket bar of a dishwasher basket when assembling the holder on a dishwasher basket, comprises a central portion 8 roughly circular in cross-section acting as a seating for the basket bar 13, 13', and a narrower opening 9 where the bar 13, 13' can be inserted. That is, if the attachment means 3, 3' are pressed to a bar 13, 13', the flexible walls of the opening allow the bar to pass, realising a snap-fit of the attachment means 3, 3' on the bars 13 and 13', respectively. When pulled off, the attachment means 3, 3' can be removed easily from the basket bar 13, 13' as, again due to the flexibility of the material, the opening 9 widens, releasing the bar.

As can be seen from Fig. 1, the openings 9 are oriented in opposite directions when the bottle holder 1 is in its detached, outstretched condition. This allows the bottle holder to be attached to a dish basket 10 of a dishwasher, as shown in Fig. 2: The single arm 4 and its attachment means 3 are guided in through the opening 11 (Fig. 1) formed by the two opposite arms 5, 5' and their common attachment means 3', so that a loop 12 is formed. The attachment means 3 and 3' are then attached to neighbouring basket bars 13 and 13', respectively, of the dish basket 10 in the manner described above in order to assemble the bottle holder 1 on the dish basket 10.

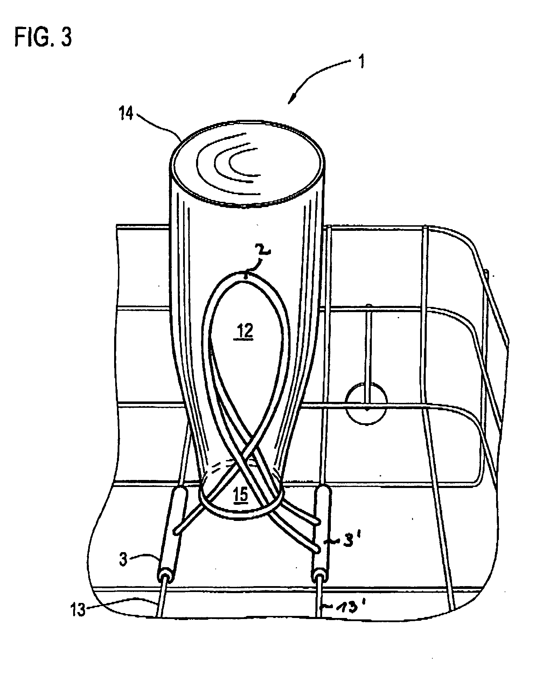

The bottle holder 1 can then be used to mount elongated containers with an opening, in particular a narrow opening, like bottles, jars, vases, baby bottles and the like, in the dish basket 10 to allow proper washing. This is shown in Fig. 3 using the example of a milk bottle 14. As can be seen, the loop 12 is inserted into the opening 15 of the milk bottle 14. Due to its flexibility, the loop 12 of the bottle holder adapts to the neck of the milk bottle 14, holding it stable in an inverse upright position.

After use, the bottle holder 1 can be as easily removed from the dish basket following the opposite procedure as has been described above for assembling it and can be stored conveniently in its outstretched condition.

It has to be noted at that point that the cross-section of the arms 4, 5, 5' need not be circular as shown in the figures. Other cross-sections may be chosen, especially cross-sections that facilitate the forming of the loop 12 and stabilize it in its loop form. Of course, the flexibility of the material - depending on the chosen chosen geometry of the generally elongated shape of the bottle holder that determines the way in which the loop is going to be formed - should be chosen such that the loop 12 can be easily formed and is then stable enough to properly support containers mounted thereon.

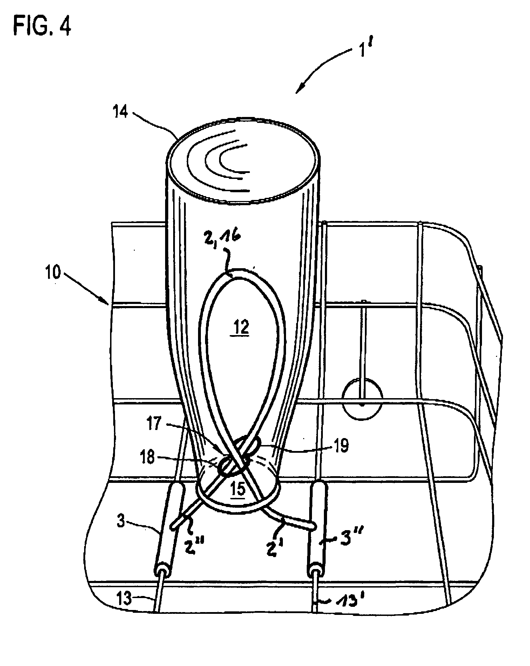

Fig. 4 shows a bottle holder 1' according to the second embodiment of the invention assembled on a dish basket 10 and holding a bottle 14. The main body 2 here consists of a single bar-like element 16 that is connected with its two opposing ends to two identical attachment means 3, 3" that are fixed to two parallel basket bars 13 and 13', respectively. A loop forming means 17 has substantially a figure-eight shape, wherein a first ring 18 of the means 17 encloses the bar-like element 16 and a second ring 19, that is almost closed or can be opened, for example by means of flexible arms forming the ring 19, acts as a support receiving another part of the bar-like element 16 forming the main body 2.

To properly assemble the bottle holder 1' on a dishwasher basket 10, a loop 12 of the bar-like element 16 is first formed. The loop forming means 17 is positions where two sections of the bar-like element 16 pass close to each other, and the neighbouring part of the bar-like element 16 is inserted into the openable ring 19 to stabilize the loop 12. Additionally, both attachment means 3, 3" are attached to neighbouring basket bars 13, 13', respectively.

## Claims

1. Container holder (1, 1') for a dish basket (10) of a dishwasher, comprising an elongated main body (2) that is connected to two attachment means (3, 3', 3") at opposing ends of the elongated main body (2), at least one attachment means being a detachable attachment means (3, 3', 3") for attaching the container holder (1, 1') to at least one basket bar (13, 13') of the dish basket (10), wherein the detachable attachment means (3, 3', 3'') is detachable from the basket bar (13, 13'), the main body (2) being adapted for holding a container with an opening (15), in particular a container with a narrowed opening (15), by inserting at least a part of the main body (2) into the opening (15), **characterised in that** the main body (2) is elongated and flexibly adapted to be bent into a protruding loop (12) for flexibly entering into the opening (15) of the container, when all attachment means (3, 3', 3'') are fixed to basket bars (13, 13'), wherein the flexible loop is capable to adapt to the inner shape of the container in order to stabilize the container in the dish basket and the main body is capable to assume an outstretched condition when at least one attachment means is not attached to a basket bar.

2. Container holder according to claim 1, **characterised in that** the elongated main body (2) in the outstretched condition is substantially Y-formed and comprises three arms (4, 5, 5'), wherein a single arm (4) is connected to a first attachment means (3) and two opposite arms (5, 5') are connected to a second attachment means (3').

3. Container holder according to claim 2, **characterized in that** in order to form the loop (12) the single arm (4) passes between the two opposite arms (5, 5').

4. Container holder according to claim 2 or 3, **characterised in that** a first part of the main body (2) comprising the single arm (4) and a second part of the main body (2) comprising the opposite arms (5, 5') are substantially equal in length.

5. Container holder according to claim 1, **characterised in that** the main body is substantially bar-shaped in an outstretched condition and comprises a loop forming means (17) that connects two parts of the main body (2) to form a loop (12).

6. Container holder according to claim 5, wherein the bar-shaped main body (2) is connected to one of two attachment means (3, 3") with each of its ends.

7. Container holder according to claim 5 or 6, **characterised in that** the loop forming means (17) comprises a first ring (18) enclosing a first part (2') of the main body (2) and a second open or openable ring (19) enclosing a second part (2'') of the main body (2) .

8. Container holder according to one of the preceding claims, **characterised in that** the attachment means (3, 3', 3'') comprise clamping means and/or engaging means.

9. Container holder according to one of the preceding claims, **characterised in that** at least one of the attachment means (3, 3' , 3'') is bar-shaped and comprises a longitudinal groove (7) for a basket bar (13, 13').

10. Container holder according to one of the preceding claims, **characterised in that** at least the main body (2), and preferably at least one attachment means (3, 3', 3''), consists of a plastics material.

## Patentansprüche

1. Halter für einen Behälter (1, 1') für einen Geschirrkorb (10) eines Geschirrspülers, der einen langgestreckten Hauptkörper (2) umfasst, der mit zwei Befestigungsmitteln (3, 3', 3'') an einander gegenüber angeordneten Seiten des langgestreckten Hauptkörpers (2) verbunden ist, wobei wenigstens ein Befestigungsmittel ein lösbares Befestigungsmittel (3, 3', 3'') zum Anbringen des Halters für einen Behälter (1, 1') an wenigstens einem Korbstab (13, 13') des Geschirrkorbs (10) ist, wobei das lösbare Befestigungsmittel (3, 3', 3'') vom Korbstab (13, 13') lösbar ist, wobei der Hauptkörper (2) dazu ausgeführt ist, einen Behälter mit einer Öffnung (15) zu halten, insbesondere einen Behälter mit einer verengten Öffnung (15), indem wenigstens ein Teil des Hauptkörpers (2) in die Öffnung (15) eingeführt wird, **dadurch gekennzeichnet, dass** der Hauptkörper (2) langgestreckt und auf flexible Weise dazu ausgeführt ist, in eine vorspringende Schleife (12) für das flexible Einführen in die Öffnung (15) des Behälters gebogen zu werden, wenn alle Befestigungsmittel (3, 3', 3'') an Korbstäben (13, 13') festgemacht sind, wobei die flexible Schleife dazu geeignet ist, sich der Innenform des Behälters anzupassen, um den Behälter im Geschirrkorb zu stabilisieren, und der Hauptkörper dazu geeignet ist, einen ausgestreckten Zustand anzunehmen, wenn wenigstens ein Befestigungsmittel nicht an einem Korbstab befestigt ist.

2. Halter für einen Behälter gemäß Anspruch 1, **dadurch gekennzeichnet, dass** der langgestreckte Hauptkörper (2) im ausgestreckten Zustand im Wesentlichen Y-förmig ist und drei Arme (4, 5, 5') umfasst, wobei ein einzelner Arm (4) mit einem ersten Befestigungsmittel (3) und zwei gegenüber angeordnete Arme (5, 5') mit einem zweiten Befestigungsmittel (3) verbunden sind.

3. Halter für einen Behälter gemäß Anspruch 2, **dadurch gekennzeichnet, dass** der einzelne Arm (4) zur Bildung der Schleife (12) zwischen den zwei gegenüber angeordneten Armen (5, 5') hindurchgeführt wird.

4. Halter für einen Behälter gemäß Anspruch 2 oder 3, **dadurch gekennzeichnet, dass** ein erster Teil des Hauptkörpers (2), der den einzelnen Arm (4) umfasst, und ein zweiter Teil des Hauptkörpers (2), der die gegenüber angeordneten Arme (5, 5') umfasst, im Wesentlichen dieselbe Länge aufweisen.

5. Halter für einen Behälter gemäß Anspruch 1, **dadurch gekennzeichnet, dass** der Hauptkörper in einem ausgestreckten Zustand im Wesentlichen stabförmig ist und ein Schleifenbildungsmittel (17) umfasst, das zwei Teile des Hauptkörpers (2) zur Bildung einer Schleife (12) verbindet.

6. Halter für einen Behälter gemäß Anspruch 5, wobei der stabförmige Hauptkörper (2) an jedem Ende mit einem von zwei Befestigungsmitteln (3, 3') verbunden ist.

7. Halter für einen Behälter gemäß Anspruch 5 oder 6, **dadurch gekennzeichnet, dass** das Schleifenbildungsmittel (17) einen ersten Ring (18) umfasst, der einen ersten Teil (2') des Hauptkörpers (2) umschließt, und einen zweiten offenen oder zu öffnenden Ring (19), der einen zweiten Teil (2'') des Hauptkörpers umschließt.

8. Halter für einen Behälter gemäß einem der vorangehenden Ansprüche, **dadurch gekennzeichnet, dass** die Befestigungsmittel (3, 3', 3'') Klammermittel und/oder Eingriffmittel umfassen.

9. Halter für einen Behälter gemäß einem der vorangehenden Ansprüche, **dadurch gekennzeichnet, dass** wenigstens eines der Befestigungsmittel (3, 3', 3'') stabförmig ist und eine längs verlaufende Rille (7) für einen Korbstab (13, 13') umfasst.

10. Halter für einen Behälter gemäß einem der vorangehenden Ansprüche, **dadurch gekennzeichnet, dass** wenigstens der Hauptkörper (2) und vorzugsweise wenigstens ein Befestigungsmittel (3, 3', 3'') aus Kunststoffmaterial besteht.

## Revendications

1. Support de récipient (1, 1') pour un panier à vaisselle (10) d'un lave-vaisselle, comprenant un corps principal oblong (2) qui est connecté à deux moyens de fixation (3, 3', 3") aux extrémités opposées du corps principal oblong (2), au moins un moyen de fixation étant un moyen de fixation détachable (3, 3', 3'') pour fixer le support de récipient (1, 1') à au moins une barre de panier (13, 13') du panier à vaisselle (10), où le moyen de fixation détachable (3, 3', 3'') peut être détaché de la barre de panier (13, 13'), le corps principal (2) étant apte à retenir un récipient avec une ouverture (15), en particulier un récipient avec une ouverture rétrécie (15), en insérant au moins une partie du corps principal (2) dans l'ouverture (15), **caractérisé en ce que** le corps principal (2) est oblong et adapté d'une manière flexible pour être courbé dans une boucle saillante (12) pour entrer d'une manière flexible dans l'ouverture (15) du récipient lorsque tous les moyens de fixation (3, 3', 3'') sont fixés à des barres de panier (13, 13'), où la boucle flexible est apte à s'adapter à la forme intérieur du récipient pour stabiliser le récipient dans le panier à vaisselle, et le corps principal est apte à assumer une condition étirée lorsqu'au moins un moyen de fixation n'est pas fixé à une barre de panier.

2. Support de récipient selon la revendication 1, **caractérisé en ce que** le corps principal oblong (2) à l'état étiré est sensiblement en forme de Y et comprend trois bras (4, 5, 5'), où un seul bras (4) est relié à un premier moyen de fixation (3) et deux bras opposés (5, 5') sont connectés à un deuxième moyen de fixation (3').

3. Support de récipient selon la revendication 2, **caractérisé en ce que**, pour former la boucle (12), le bras unique (4) passe entre les deux bras opposés (5, 5').

4. Support de récipient selon la revendication 2 ou 3, **caractérisé en ce qu'**une première partie du corps principal (2) comprenant le bras unique (4) et une deuxième partie du corps principal (2) comprenant les bras opposés (5, 5') sont sensiblement égales en longueur.

5. Support de récipient selon la revendication 1, **caractérisé en ce que** le corps principal est sensiblement en forme de barre à l'état étiré et comprend un moyen de formation de boucle (17) qui relie les deux parties du corps principal (2) pour former une boucle (12).

6. Support de récipient selon la revendication 5, dans lequel le corps principal en forme de barre (2) est relié à un de deux moyens de fixation (3, 3'') avec chacune de ses extrémités.

7. Support de récipient selon la revendication 5 ou 6, **caractérisé en ce que** le moyen de formation de boucle (17) comprend un premier anneau (18) renfermant une première partie (2') du corps principal (2) et un deuxième anneau ouvert ou pouvant être ouvert (19) renfermant une deuxième partie (2") du corps principal.

8. Support de récipient selon l'une des revendications précédentes, **caractérisé en ce que** les moyens de fixation (3, 3', 3") comprennent des moyens de serrage et/ou des moyens d'engagement.

9. Support de récipient selon l'une des revendications précédentes, **caractérisé en ce qu'**au moins un des moyens de fixation (3, 3', 3'') est en forme de barre et comprend une rainure longitudinale (7) pour une barre de panier (13, 13').

10. Support de récipient selon l'une des revendications précédentes, **caractérisé en ce qu'**au moins le corps principal (2) et de préférence au moins un moyen de fixation (3, 3', 3'') est réalisé en matériau plastique.
